## Europäisches Patentamt

## European Patent Office

## Office européen des brevets

(19)

(11) **EP 0 707 751 B1**

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(21) Anmeldenummer: **94922268.1**

(22) Anmeldetag: **07.07.1994**

(51) Int Cl.⁶: **H02H 7/085**, E05F 15/00

(86) Internationale Anmeldenummer:
**PCT/EP94/02228**

(87) Internationale Veröffentlichungsnummer:
**WO 95/02268 (19.01.1995 Gazette 1995/04)**

(54) **VERFAHREN ZUM STEUERN DES ZUM BEWEGEN EINER FENSTERSCHEIBE IN EINEM KRAFTFAHRZEUG VORGESEHENEN GLEICHSTROMMOTORS**

PROCESS FOR CONTROLLING THE D.C. MOTOR USED FOR MOVING A WINDOW IN A MOTOR VEHICLE

PROCEDE DE COMMANDE D'UN MOTEUR A COURANT CONTINU SERVANT A MANOEUVRER UNE VITRE D'UN VEHICULE AUTOMOBILE

(84) Benannte Vertragsstaaten:
**DE ES FR GB IT NL SE**

(30) Priorität: **08.07.1993 DE 4322810**
**26.01.1994 DE 4402267**

(43) Veröffentlichungstag der Anmeldung:
**24.04.1996 Patentblatt 1996/17**

(73) Patentinhaber: **DODUCO GMBH + Co**
**Dr. Eugen Dürrwächter i.K.**
**75181 Pforzheim (DE)**

(72) Erfinder:
• **KÜHNLE, Andreas**
**D-75438 Knittlingen (DE)**
• **SCHULZE, Gunter, Lothar**
**D-75228 Ispringen (DE)**
• **UHL, Günter**
**D-74921 Helmstadt-Bargen (DE)**

(74) Vertreter: **Twelmeier, Ulrich, Dipl. Phys. et al**
**porta patentanwälte**
**Dipl.-Phys. U. Twelmeier**
**Dr. techn. W. Leitner**
**Westliche Karl-Friedrich-Str. 29-31**
**75172 Pforzheim (DE)**

(56) Entgegenhaltungen:
**EP-A- 0 422 388         WO-A-91/04607**
**DE-A- 3 532 078         GB-A- 2 010 957**
**US-A- 4 514 670         US-A- 5 069 000**

**Beschreibung**

Die Erfindung geht aus von einem Verfahren mit den im Oberbegriff des Anspruchs 1 angegebenen Merkmalen. Ein solches Verfahren ist aus der GB-A-2 010 957 bekannt.

Elektrische Scheibenheber werden in Kraftfahrzeugen üblicherweise direkt über Bedientasten geschaltet. Läuft die Fensterscheibe gegen einen Anschlag, so steigt der Strom des die Fensterscheibe bewegenden Gleichstrommotors stark an. Das dabei entwickelte Stillstandsdrehmoment des Motors ist beträchtlich, und werden Personen beim Schließen der Fensterscheibe eingeklemmt, besteht Verletzungsgefahr. Es ist sogar bereits zu tödlichen Unfällen von Kindern gekommen. Es ist deshalb erforderlich, die Bewegung der Fensterscheiben zu kontrollieren.

Es ist Stand der Technik, den Gleichstrommotor des Scheibenheberantriebs mit einem Drehgeber zu kombinieren, welcher pro Umdrehung des Motors einen Impuls abgibt; dadurch kann die Stellung der Scheibe kontrolliert und bei einem vorzeitigen Stillstand eingegriffen werden. Der Drehgeber ist mit Hallsensoren ausgerüstet und verteuert den Gleichstrommotor nicht unbeträchtlich. Es ist ferner bekannt, Endabschalter vorzusehen, die den Motor abschalten, wenn die Scheibe eine ihrer Endlagen erreicht hat.

Der vorliegenden Erfindung liegt die Aufgabe zugrunde, die Bewegung der Fensterscheibe zuverlässig, aber mit weniger Aufwand zu überwachen mit dem Ziel, einen gefährlichen Einklemmvorgang zu verhindern.

Zur Lösung dieser Aufgabe wird das Verfahren mit den im Anspruch 1 angegebenen Merkmalen vorgeschlagen.

Vorteilhafte Weiterbildungen der Erfindung sind Gegenstand der abhängigen Ansprüche.

Die Erfindung geht nicht den Weg, die Stellung der Scheibe aus der beobachteten Drehbewegung des Motors zu überwachen, sondern wertet die elektrische Stromaufnahme des Motors aus. Es hat sich nämlich gezeigt, dass aus dem zeitlichen Verlauf des Motorstromes ein zuverlässiges Kriterium für das Auftreten einer gefährlichen Situation hergeleitet werden kann.

Läuft die Fensterscheibe gegen einen ihrer Endanschläge, so dass sie ganz geöffnet oder ganz geschlossen ist, dann beobachtet man einen charakteristischen, steilen, schnellen Anstieg der Stromstärke. Wird jedoch ein menschlicher Körperteil eingeklemmt, dann steigt die Stromstärke zwar auch an, zunächst aber weniger steil. Erfindungsgemäss kann ein gefährliches Einklemmen dadurch verhindert werden, dass die Drehrichtung des Gleichstrommotors umgesteuert wird, wenn in einer vorgegebenen Zeitspanne $\Delta t$ eine Änderung der gemittelten Stromstärke I zwischen einem unteren Grenzwert $\Delta \overline{I}_u$ und und einem oberen Grenzwert $\Delta \overline{I}_o$ liegt, wobei der untere Grenzwert so gewählt wird, dass im normalen Bewegungsablauf auftretende Stromstärkeschwankungen nicht zu einem Umsteuern des Motors führen können, und wobei der obere Grenzwert so gewählt wird, dass man bei Überschreiten des Grenzwertes sicher sein kann, dass die Scheibe gegen ihren Endanschlag gefahren ist.

Änderungen der gemittelten Stromstärke zu beobachten, ist zweckmässig, weil der Strom eines Gleichstrommotors einen Wechselstromanteil enthält, wodurch der Strom wellig wird. Die Stromwelligkeit (engl.: ripple) wird durch die Stromumschaltung des Kommutators des Gleichstrommotors hervorgerufen. Die Anzahl der Kommutatorlamellen des Gleichstrommotors bestimmt die Anzahl der Perioden des Wechselstromanteiles pro Umdrehung des Motors. Gleichstrommotoren für Fensterheber in Kraftfahrzeugen haben im Leerlauf (bei Betrieb mit angebauten Getriebe, aber ohne Scheibe) typisch einen Wechselstromanteil mit einer Frequenz von etwa 750 Hz. Erfindungsgemäss kann anstelle des Verlaufs der Stromstärke auch überwacht werden, wie sich die Welligkeit des vom Gleichstrommotor aufgenommen Stroms ändert. Läuft die Fensterscheibe gegen einen Endanschlag, dann fällt die Frequenz der Stromschwingung sehr schnell ab auf den Wert Null. Wird aber ein menschlicher Körperteil eingeklemmt, dann fällt die Frequenz der Stromschwingung relativ langsam ab, weil der Körperteil nachgiebig ist. Erfindungsgemäss kann ein gefährliches Einklemmen deshalb auch dadurch verhindert werden, dass beim Schließen der Fensterscheibe die Drehrichtung des Motors umgekehrt wird, wenn in einer vorgegebenen Zeitspanne $\Delta t$ eine Änderung $\Delta f$ der Frequenz des Wechselstromanteils des Stroms zwischen einem unteren Grenzwert $\Delta f_u$ und einem oberen Grenzwert $\Delta f_o$ liegt. Dabei wird der untere Grenzwert so gewählt, dass im normalen, ungestörten Bewegungsablauf der Fensterscheibe und des Gleichstrommotors auftretende Frequenzänderungen nicht zu einem Schaltvorgang führen. Der obere Grenzwert wird hingegen so gewählt, dass sichergestellt ist, dass bei seinem Überschreiten die Scheibe gegen ihren Endananschlag gelaufen ist. Wird der obere Grenzwert der Änderung der Strömstärke bzw. der Änderung der Frequenz überschritten, muss der Motor nicht umgesteuert werden, um einen möglicherweise eingeklemmten Körperteil freizugeben, sondern der Motor wird lediglich stillgesetzt.

Die beiden Kriterien, die aus der Stärke des Laststromes und aus der Frequenz des Wechselstromanteils abgeleitet werden, können einzeln, aber auch in Kombination ausgewertet werden. Die größte Sicherheit erhält man, wenn man die Drehrichtung des Motors umkehrt, wenn entweder die Änderung der gemittelten Stromstärke oder die Änderung der Frequenz in dem gewählten Fenster zwischen unterem und oberem Grenzwert liegt.

Die Zeitspanne, in welcher der Verlauf des Laststroms beobachtet und bewertet wird, wird so gewählt, dass Schwankungen, die innerhalb einer Periode des Wechselstromanteils auftreten, keine wesentliche Rolle spielen. Die Zeitspanne $\Delta t$ sollte deshalb zweckmässi-

gerweise wenigstens drei Perioden, vorzugsweise wenigstens fünf Perioden des Wechselstromanteils im Leerlauf des Motors betragen. Aus Sicherheitsgründen sollte die Zeitspanne aber nicht länger sein, als erforderlich ist, um eine relevante Aussage zu erhalten. Es wird deshalb bevorzugt, die Zeitspanne $\Delta t$ nicht länger als 20, vorzugsweise nicht länger als zehn Perioden des Wechselstromanteils beim Leerlauf des Motors zu wählen.

Wegen der Welligkeit des Laststromes des Gleichstrommotors kann die Beobachtung und Auswertung des Stromstärkeverlaufes anstatt in einer vorgewählten Zeitspanne auch über eine vorgewählte Anzahl von Perioden des Wechselstromanteils erfolgen; wegen der Eigenart des Gleichstrommotors entspricht einer Periode seines Wechselstromanteils ein bestimmter Verschiebeweg der Scheibe, so dass auch einer vorgewählten Anzahl von Perioden des Wechselstromanteils jeweils ein entsprechender gleichbleibender Verschiebeweg entspricht, den man aus Sicherheitsgründen so kurz wählt, dass er noch nicht zu einem gefährlichen Einklemmen führen. kann; bei einem typischen Scheibenantrieb beträgt der Verschiebeweg pro Periode ungefähr 0,2 mm, wodurch sich mit Hilfe der Periodenzählung eine gute Weg-Auflösung erzielen läßt. Vorzugsweise begrenzt man - wie oben bereits erläutert - die Beobachtung auf jeweils fünf bis zehn Perioden. Führt man demgemäss die Beobachtung des Stromstärkeverlaufs während einer vorgewählten Anzahl von Perioden aus, dann benötigt man dafür einen Periodenzähler anstelle eines Zeitgebers.

Um die Änderung der mittleren Stromstärke in der gewählten Zeitspanne bzw. in der gewählten Anzahl von Perioden zu ermitteln, genügt es im Prinzip, die Stromstärke über die gewählte Zeitspanne zu integrieren und zu überprüfen, ob das Integral zwischen einem vorgewählten unteren und oberen Grenzwert liegt oder diesen überschreitet.

Unter der normalerweise erfüllten Voraussetzung, dass die Zuleitung für den Strom zum Scheibenhebermotor einen definierten Ohm'schen Leitungswiderstand hat, kann statt einer Strommessung auch eine einfache Spannungsmessung am Motor erfolgen, wobei zu beachten ist, dass die Spannung zwar eine Welligkeit mit derselben Frequenz hat wie der Strom, die Spannung aber mit zunehmender Stromstärke absinkt.

Messung und Auswertung können sehr kostengünstig durch einen Micro-Controller erfolgen, welcher mit dem Motor kombiniert wird. Der Micro-Controller speichert die Grenzwerte, führt die Messung durch, vergleicht die Messwerte mit den gespeicherten Grenzwerten und gibt gemäss dem Ergebnis des Vergleichs ein Steuersignal ab. Der Micro-Controller kann in vorteilhafter Weiterbildung der Erfindung auch dazu eingesetzt werden, die gespeicherten Grenzwerte nach Erfahrungswerten zu optimieren; alterungsbedingte Änderungen der normalen Stromaufnahme können auf diese Weise kompensiert werden. Der Auswertung im Micro-Controller können ferner Erwartungswerte vorgegeben werden, die sich an den letzten erfaßten "normalen" Messwerten orientieren. Der Micro-Controller kann mithin lernfähig arbeiten.

Der Laststrom des Gleichstrommotors zeigt beim Heben der Scheibe einen typischen Stromstärkeverlauf: Nach einem hohen Anlaufstrom und einer kurzen Einschwingphase steigt der Laststrom infolge der Reibung der Scheibe in ihren Seitenführungen und Dichtungen allmählich an, um dann beim Einlaufen der Scheibe in die obere Anschlagdichtung steil anzusteigen. Ein gefährliches Einklemmen kann zwischen der Anlaufphase des Motors und dem Einlaufen in die obere Anschlagdichtung erfolgen, also in der Phase, in welcher der Laststrom allmählich ansteigt. Wenn man aus Sicherheitsgründen gefährliche Abweichungen von der normalen Stromstärke feststellen und daraufhin die Drehrichtung des Motors umkehren will, dann sollte man wissen, mit welcher Stromstärke man im Normalfall zu rechnen hat. Der Erwartungswert der ermittelten Stromstärke, von dem aus die Abweichung der Stromstärke ermittelt wird, wird deshalb vorzugsweise durch lineare Extrapolation aus den beiden vorangegangenen Stromstärkemessungen bestimmt, die als noch normal bewertet wurden. Es hat sich gezeigt, dass man auf diese Weise zu zuverlässigen Aussagen über gefährliche bzw. ungefährliche Stromstärkeänderungen kommen kann, zumal dadurch auch Stromstärkeänderungen, die durch Alterung, Regen, Frost, Eis, Verschleiß und dergleichen Einflußfaktoren verursacht sind und die Absolutwerte der Stromstärke ändern, den relativen Stromstärkeverlauf aber im wesentlichen unverändert lassen, die Zuverlässigkeit der Überwachung nicht nachteilig beeinflussen.

Wird ein Fenster geöffnet und läuft die Scheibe dabei gegen ihren unteren Endanschlag, dann stehen der Endanschlag und der Antrieb unter mechanischer Vorspannung. Wird die Scheibe dann gestartet, um das Fenster zu schließen, dann kommt es zu einem "Ausfedern" der Scheibe und ihres Antriebs aus der unteren Endstellung mit der Folge, dass auf den anfänglich hohen Anlaufstrom des Motors eine das normale Niveau der Stromstärke deutlich unterschreitende Absenkung der Stromstärke folgt, ein Verlauf, der einem Einschwingvorgang ähnelt. Dieser Stromstärkeverlauf in der Startphase eignet sich nicht dafür, frühzeitig einen gefährlichen Einklemmvorgang zu erkennen, der in dieser frühen Phase auch sehr unwahrscheinlich ist, weshalb diese Anlauf- und Einschwingphase im Stromstärkeverlauf des Gleichstrommotors vorzugsweise unberücksichtigt bleibt, wenn es darum geht, ein die Drehrichtung des Motors umkehrendes Signal zu bilden. Praktisch kann das so realisiert werden, dass man den Stromstärkeverlauf während einer vorgegebenen, als Erfahrungswert aus dem typischen Stromstärkeverlauf gewonnenen Zeitspanne bzw. während einer entsprechenden Anzahl von Perioden des Wechselstromanteils im Laststrom unberücksichtigt läßt.

Beim Einfahren der Scheibe in ihre obere Anschlagdichtung steigt der Strom an; in dieser Phase die Drehrichtung des Motors umzukehren, wäre unsinnig. Vorzugsweise wird deshalb der typische Stromstärkeverlauf, der beim Einfahren der Scheibe in ihre obere Anschlagdichtung auftritt, gespeichert, mit dem aktuellen Stromstärkeverlauf verglichen und bei Übereinstimmung innerhalb einer vorgewählten Toleranzbreite um den gespeicherten Stromstärkeverlauf herum kein Signal zur Drehrichtungsumkehr des Gleichstrommotors abgegeben. Die Entscheidung, ob ein typischer Stromstärkeverlauf wie beim Einfahren in die obere Anschlagdichtung vorliegt, kann bei Einsatz eines Mikrocontrollers mit Vorteil nach einem mit Fuzzy-Logik arbeitenden Entscheidungsverfahren getroffen werden.

Figur 1    zeigt einen typischen Verlauf des Laststroms eines Gleichstrommotors beim Heben einer Scheibe, und

Figur 2    zeigt im Schnitt den typischen Aufbau einer Dichtung am oberen. Anschlag einer Scheibe.

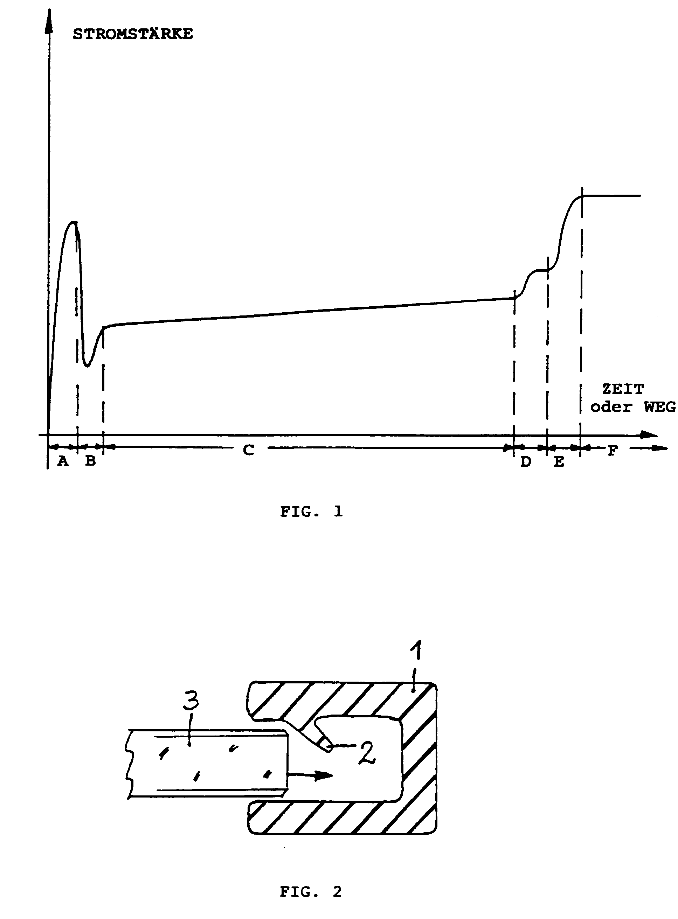

Figur 1 zeigt einen typischen Verlauf des Laststroms des Gleichstrommotors, und zwar nach einer durchgeführten Glättung, um die durch die Kommutatorlamellen hervorgerufene Welligkeit zu beseitigen. Das kann einfach dadurch geschehen, dass man den Laststrom einem Strom-Spannungswandler zuführt und die sich daraus ergebende wellige Spannung einer Tiefpaßfilterung unterzieht. Der auf diese Weise geglättete Stromverlauf kann unmittelbar als gemitteltes Stromstärkesignal für die erfindungsgemäss durchzuführende Auswertung herangezogen werden.

Die Zeit- bzw. Wegbasis für die Stromstärkeüberwachung kann man dadurch bilden, dass man das vom Strom-Spannungswandler kommende wellige Spannungssignal parallel zur Tiefpaßfilterung auch einer Hochpaßfilterung unterzieht und auf diese Weise den Wechselstromanteil des Stromsignals gewinnt, der als eine Folge von Zählimpulsen einem Zähler zugeführt werden kann, der die Anzahl der Perioden bestimmt, innerhalb der der Stromstärkeverlauf beobachtet und bewertet wird.

Der in Figur 1 dargestellte Stromstärkeverlauf zeigt in einer ersten Phase A einen hohen Anlaufstrom des Gleichstrommotors, gefolgt von einem deutlichen Spannungsabfall in einer Phase B, in welcher die Scheibe und ihr Antrieb aus der unteren Endlage ausfedern. Es folgt dann die normale Bewegungsphase C, in welcher die Stromstärke mit zunehmender Reibung in den Seitenführungen der Scheibe allmählich ansteigt, bis die obere Anschlagdichtung erreicht wird, die in Figur 2 dargestellt ist. Die Dichtung 1 hat ungefähr ein U-Profil mit einer Dichtlippe 2, welche von einem der Schenkel des Profils nach innen gerichtet vorspringt. Wenn die Scheibe 3 in die Dichtung 1 einfährt, trifft sie zunächst auf die Dichtlippe 2 und biegt sie weg, wodurch die Stromstärke kurzzeitig steil ansteigt auf ein höheres Niveau (Phase D), auf welchem die Stromstärke bleibt, bis die Scheibe dann unter Kompression der Dichtung 1 an ihren Endanschlag fährt und zum Stillstand kommt, was nochmals einen steilen Stromanstieg bewirkt (Phase E) bis zum Erreichen des Maximalstroms, der gezogen wird, wenn der Motor zur Ruhe gekommen ist (Phase F).

Die Phasen A und B bleiben bei der Bewertung des Stromstärkeverlaufs unberücksichtigt, wohingegen die folgenden Phasen auf einen Stromanstieg, der ein gefährliches Einklemmen signalisiert, überwacht werden. Wird ausserhalb eines möglichst engen Toleranzbereiches um den Stromstärkeverlauf herum ein gefährlicher Stromanstieg beobachtet, wird die Drehrichtung des Motors umgekehrt, es sei denn, die Auswerteschaltung erkennt einen typischen Stromstärkeverlauf, wie er in den Phasen D und E auftritt.

Mit Vorteil kann das erfindungsgemässe Verfahren auch dazu benutzt werden, um dann den Motor stillzusetzen, wenn die Fensterscheibe an ihren Endanschlag fährt. Befindet sich die Fensterscheibe in einer ihrer Endstellungen, dann hat ein Start des Gleichstrommotors in einer Drehrichtung, in welcher die Scheibe nur fester gegen den Anschlag gedrückt wird, eine hohe Strombelastung zur Folge (siehe Phase F). Um das zu vermeiden, ist in Weiterbildung der Erfindung vorgesehen, dass beim Überschreiten des oberen Grenzwertes der Frequenzänderung bzw. der Stromänderung der Motor nicht nur stillgesetzt wird, sondern auch ein Wiedereinschalten in der letzten Drehrichtung des Motors blockiert wird. Beim Einschalten in der Gegenrichtung wird der hohe Stillstands-Stromfluß zweckmässigerweise für eine begrenzte Zeit zugelassen, um z.B. vereiste Scheiben losbrechen zu können.

**Patentansprüche**

1.  Verfahren zum Steuern des zum Bewegen einer Fensterscheibe in einem Kraftfahrzeug vorgesehenen Gleichstrommotors, wobei der vom Motor gezogene Strom beobachtet und beim Schließen der Fensterscheibe der Motor stillgesetzt wird, wenn ein aus der Strombeobachtung gewonnener Grenzwert überschritten wird, **dadurch gekennzeichnet**, daß aus der Stromrichtung auf die Bewegungsrichtung der Fensterscheibe geschlossen und beim Schließen der Fensterscheibe die Drehrichtung des Motors umgekehrt wird, wenn in einer vorgegebenen Zeitspanne $\Delta t$ eine Änderung $\Delta f$ der Frequenz des Wechselstromanteils des Stroms zwischen einem unteren Grenzwert $\Delta f_u$ und einem oberen Grenzwert $\Delta f_o$ liegt und/oder wenn in einer vorgegebenen Zeitspanne $\Delta t$ oder in einem vorgegebenen Drehinkrement des Gleichstrommotors eine Änderung $\Delta I$ der gemittelten Stromstärke $\overline{I}$ zwischen einem unteren Grenzwert $\Delta\overline{I}_u$ und einem

oberen Grenzwert $\Delta\bar{I}_o$ liegt, wohingegen bei Überschreiten eines oder beider oberer Grenzwerte der Motor stillgesetzt wird.

2. Verfahren nach Anspruch 1, **dadurch gekennzeichnet,** daß die Drehrichtung umgekehrt wird, wenn eine der beobachteten Änderungen in dem Bereich

$$\Delta f_u < \Delta f < \Delta f_o \text{ bzw.}$$

$$\Delta\bar{I}_u < \Delta I < \Delta\bar{I}_o$$

liegt.

3. Verfahren nach Anspruch 1, **dadurch gekennzeichnet**, dass die Zeitspanne $\Delta t$ bzw. das vorgegebene Drehinkrement des Gleichstrommotors zwischen 3 und 20, vorzugsweise 5 bis 10 Periodendauern des Wechselstromanteils im Leerlauf des Motors beträgt.

4. Verfahren nach einem der Ansprüche 1 bis 3, **dadurch gekennzeichnet**, dass beim Öffnen der Fensterscheibe der Motor stillgesetzt wird, wenn in einer vorgegebenen Zeitspanne $\Delta t_1$ bzw. in einem vorgegebenen Drehinkrement des Gleichstrommotors die Änderung $\Delta f$ der Frequenz des Wechselstromanteils des Stroms einen Grenzwert $\Delta f_1$ überschreitet und/oder die Änderung $\Delta\bar{I}$ der gemittelten Stromstärke einen Grenzwert $\Delta\bar{I}_1$ überschreitet.

5. Verfahren nach Anspruch 4, **dadurch gekennzeichnet**, dass $\Delta t_1 = \Delta t$, $\Delta f_1 = \Delta f_o$ und $\Delta\bar{I}_1 = \Delta\bar{I}_o$ gewählt wird.

6. Verfahren nach einem der vorstehenden Ansprüche, **dadurch gekennzeichnet,** dass mit dem Stillsetzen des Motors durch Überschreiten der Grenzwerte $\Delta f_o$, $\Delta f_1$, $\Delta\bar{I}_o$ bzw. $\Delta\bar{I}_1$ die letzte Drehrichtung des Motors für die als nächste folgende Betätigung der Fensterscheibe blockiert wird.

7. Verfahren nach einem der vorstehenden Ansprüche, **dadurch gekennzeichnet**, dass die Grenzwerte nach Erfahrungswerten gebildet und bei Bedarf angepaßt werden.

8. Verfahren nach einem der vorstehenden Ansprüche, **dadurch gekennzeichnet**, dass der Erwartungswert der gemittelten Stromstärke, von dem die Abweichung der Stromstärke ermittelt wird, durch lineare Extrapolation aus den beiden vorangegangenen Stromstärkemessungen bestimmt wird.

9. Verfahren nach einem der vorstehenden Ansprüche, **dadurch gekennzeichnet**, dass die Anlauf- und Einschwingphase im Stromstärkeverlauf des Gleichstrommotors unberücksichtigt bleibt.

10. Verfahren nach Anspruch 9, **dadurch gekennzeichnet**, dass der Stromstärkeverlauf bzw. Frequenzverlauf in einer fest vorgewählten Zeitspanne nach dem Einschalten des Gleichstrommotors unberücksichtigt bleibt.

11. Verfahren nach einem der vorstehenden Ansprüche, **dadurch gekennzeichnet**, dass der typische Stromstärkeverlauf beim Einfahren der Scheibe in die obere Anschlagdichtung der Scheibe gespeichert, mit dem aktuellen Stromstärkeverlauf verglichen und bei Übereinstimmung innerhalb einer vorgewählten Toleranzbreite kein Signal zur Drehrichtungsumkehr des Gleichstrommotors abgegeben wird.

**Claims**

1. Process for controlling the direct current motor provided in a motor vehicle for moving a window pane, in which process the current drawn by the motor is monitored and while the window is being closed the motor is stopped if a limit is exceeded which is derived from the monitoring of the current, **characterized in tha**t the direction of movement of the window pane is deduced from the current direction, and the direction of rotation of the motor is reversed upon closure of the window pane, if during a given time interval $\Delta t$ a change $\Delta f$ of the frequency of the alternating current portion of the current lies between a lower limit $\Delta f_u$ and an upper limit $\Delta f_o$ and/or if in a given time interval $\Delta t$ or in a given rotary increment of the direct current motor a change $\Delta I$ of the averaged amperage $\bar{I}$ lies between a lower limit $\Delta\bar{I}_u$ and an upper limit $\Delta\bar{I}_o$, whereas the motor is stopped if one or both upper limits are exceeded.

2. Process according to claim 1, **characterized in that** the direction of rotation is reversed, if one of the monitored changes is in the range

$$\Delta f_u < \Delta f < \Delta f_o \qquad \text{or} \qquad \Delta\bar{I}_u < \Delta I < \Delta\bar{I}_o.$$

3. Process according to claim 1, **characterized in that** the time interval $\Delta t$ or the given rotary increment, resp., of the direct current motor lies between 3 and 20, preferably 5 to 10 periods of the alternating current portion during idling of the motor.

4. Process according to any one of the claims 1 to 3, **characterized in that** during opening of the window pane the motor is stopped, if during a given time

period $\Delta t_1$ or during a given rotary increment, resp., of the direct current motor the change $\Delta f$ of the frequency of the alternating current portion of the current exceeds a limit $\Delta f_1$, and/or the change $\Delta \bar{I}$ of the averaged amperage exceeds a limit $\Delta \bar{I}_1$.

5. Process according to claim 4, **characterized in that** $\Delta t_1 = \Delta t$, $\Delta f_1 = \Delta f_0$ and $\Delta \bar{I}_1 = \Delta \bar{I}_0$ are selected.

6. Process according to any one of the previous claims, **characterized in that** together with the stopping of the motor by exceeding the limits $\Delta f_0$, $\Delta f_1$, $\Delta \bar{I}_0$ or $\Delta \bar{I}_1$, resp., the last direction of rotation of the motor is blocked for the next following actuation of the window pane.

7. Process according to any one of the previous claims, **characterized in that** the limits are determined from historical values and adjusted as required.

8. Process according to any one of the previous claims, **characterized in that** the predicted data of the averaged amperage from which the deviation of the amperage is determined, is obtained by linear interpolation from the two proceeding amperage measurements.

9. Process according to any one of the previous claims, **characterized in that** the start-up and overshoot phase in the amperage behavior of the direct current motor is omitted.

10. Process according to claim 9, **characterized in that** the amperage behavior or the frequency behavior, resp., is omitted during a fixed given time period after turning on the direct current motor.

11. Process according to any one of the previous claims, **characterized in that** the typical amperage behavior ocurring during the sliding of the window pane into the upper stop collar seal is stored, compared with the actual amperage behavior and if in agreement within a selected tolerance band, no signal is given to reverse the direction of rotation of the direct current motor.

## Revendications

1. Procédé de commande d'un moteur à courant continu servant à manoeuvrer une vitre d'un véhicule automobile, le courant consommé par le moteur étant observé et le moteur étant arrêté lors de la fermeture de la vitre, si une valeur limite résultant de l'observation du courant est dépassée, caractérisé en ce que la direction de déplacement de la vitre est déduite à partir de la direction du courant et la direction de rotation du moteur est inversée lors de la fermeture de la vitre, si dans un intervalle de temps prédéterminé $\Delta t$, une modification $\Delta f$ de la fréquence de la composante alternative se situe entre une valeur limite inférieure $\Delta f_u$ et une valeur limite supérieure $\Delta f_o$ et/ou si dans un intervalle de temps prédéterminé $\Delta t$ ou dans un incrément de rotation prédéterminé du moteur à courant continu, une modification $\Delta I$ de l'intensité du courant moyennée $T$ se situe entre une valeur limite inférieure $\Delta T_u$ et une valeur limite supérieure $\Delta T_o$, le moteur étant arrêté en cas de dépassement de l'une ou des deux valeurs limites supérieures.

2. Procédé selon la revendication 1, caractérisé en ce que la direction de rotation est inversée si une des modifications observées se situe dans la gamme :

$$\Delta f_u < \Delta f < \Delta f_o \text{ ou}$$

$$\Delta T_u < \Delta I < \Delta To$$

3. Procédé selon la revendication 1, caractérisé en ce que l'intervalle de temps $\Delta t$ ou l'incrément de rotation prédéterminé du moteur à courant continu se situe de préférence entre 3 et 20, de préférence entre 5 et 10 durées de période de la composante alternative lorsque le moteur tourne à vide.

4. Procédé selon l'une quelconque des revendications 1 à 3, caractérisé en ce que le moteur est arrêté lors de l'ouverture de la vitre si dans un intervalle de temps prédéterminé $\Delta t_1$ ou dans un incrément de rotation prédéterminé du moteur à courant continu, la modification $\Delta f$ de la fréquence de la composante alternative du courant dépasse une valeur limite $\Delta f_1$ et/ou la modification $\Delta \bar{I}$ de l'intensité du courant moyennée dépasse une valeur limite $\Delta \bar{I}_1$.

5. Procédé selon la revendication 4, caractérisé en ce qu'on choisit $\Delta t_1 = \Delta t$, $\Delta f_1 = \Delta f_o$ et $\Delta \bar{I}_1 = \Delta \bar{I}_0$.

6. Procédé selon l'une quelconque des revendications précédentes, caractérisé en ce que la mise à l'arrêt du moteur due au dépassement des valeurs limites $\Delta f_o$, $\Delta f_1$, $\Delta \bar{I}_0$ ou $\Delta \bar{I}_1$ bloque la dernière direction de rotation du moteur pour l'actionnement suivant de la vitre.

7. Procédé selon l'une quelconque des revendications précédentes, caractérisé en ce que les valeurs limites sont établies en fonction de valeurs empiriques et sont adaptées si nécessaire.

8. Procédé selon l'une des revendications précédentes, caractérisé en ce que la valeur escomptée de l'intensité du courant moyennée à partir de laquelle est déterminée l'écart de l'intensité du courant est définie par une extrapolation linéaire des deux mesures d'intensité du courant précédentes.

9. Procédé selon l'une des revendications précédentes, caractérisé en ce que la phase de démarrage et de régime transitoire demeure inchangée pendant la variation de l'intensité du courant du moteur à courant continu.

10. Procédé selon la revendication 9, caractérisé en ce que la variation de l'intensité du courant ou la variation de la fréquence demeurent inchangées dans un intervalle de temps fixe choisi au préalable après la mise en route du moteur à courant continu.

11. Procédé selon l'une quelconque des revendications précédentes, caractérisé en ce que la variation typique de l'intensité du courant est stockée lorsque la vitre pénètre dans le joint d'étanchéité de butée de la vitre, comparée avec la présente variation de l'intensité du courant et si elles coïncident dans une plage de tolérances choisie au préalable, aucun signal n'est émis pour inverser la direction de rotation du moteur à courant continu.

FIG. 1

FIG. 2